# EUROPEAN PATENT SPECIFICATION

(11) **EP 0 540 689 B1**
(45) Date of publication and mention of the grant of the patent: **15.09.1999**
(21) Application number: 91915729.7
(22) Date of filing: 23.07.1991
(51) Int. Cl.: C04B 35/591, C01B 21/06

(54) **PROCESS FOR NITRIDING SILICON-CONTAINING MATERIALS**
VERFAHREN ZUR NITRIDIERUNG SILICIUMHALTIGER MATERIALIEN
PROCEDE DE NITRURATION DE MATERIAUX A TENEUR EN SILICIUM

(30) Priority: 24.07.1990 US 557194
(43) Date of publication of application: 12.05.1993
(73) Proprietor: EATON CORPORATION, Cleveland, Ohio 44114-2584 (US)
(72) Inventor: EDLER, James, P., Troy, MI 48098 (US)
(74) Representative: West, Alan Harry
(86) International application number: US9105192
(87) International publication number: WO9201650

(56) References cited:
- EP-A- 0 268 166
- EP-A- 0 322 174
- WO-A-92/01653
- JP-A- 54 001 114
- JP-A- 60 042 209
- US-A- 3 937 792
- US-A- 4 235 857
- "Effect of Rate-Controlled nitriding and Nitriding atmosphers on the formation of reaction-bonded si3N4" JOHN MANGELS, Ceramic Bulletin, Vol. 60, No. 6, 1981, pages 613-615 and Table 1.
- Journal of Materials Science, Vol. 14, 1979, "Review of Reaction-Bonded silicon nitride: its formation and properties", A.J. MOULSEN, page 1031, column 2, lines 28-40.
- Ceramic Bulletin, Vol. 62, No. 5, 1983, "Slip-casting of silicon shapes and their nitriding", WILLIAMS et al., page 608.
- Journal of the American Ceramic Society, Vol. 59, No. 7-8, Jul-Aug 1976, "Nitridation of High-purity Silicon", A. ATKINSON.

## Description

This invention relates generally to a process for making silicon nitride articles or particles, and specifically relates to the nitriding process for producing such articles and powders.

Silicon nitride has been a material of interest for many years due to its high temperature strength, creep resistance and low thermal expansion, as well as its extremely efficient resistance to corrosion and its ability to make critically engineered parts.

Generally, the practice of nitriding silicon-containing material has been investigated for many years, and has resulted in a process which takes a very long time, so long in fact that the process is not commercially feasible. It would be advantageous to practice a method for nitriding the silicon-containing material to produce silicon nitride in a manner which takes less time than current methods, as well as producing a material which has substantially the same properties.

Generally, it has been the practice to form silicon nitride parts by "reaction bonding" or by "hot pressing" or by a pressureless sintering process. Reaction bonding comprises compacting silicon powder of commonly less than 400 mesh into the part commonly at ambient temperature and then exposing the part to molecular nitrogen at about 1400°C for a period of time sufficient to convert the silicon into silicon nitride such as described in United States Patent 4,235,857, Such is also reviewed by A.J. Moulson in an article titled "Review Reaction-Bonded Silicon Nitride: Its Formation and Properties," Journal-Materials Science, 14, (1979) 1017-1051 and by Mangels in an article titled "Effect of Rate-Controlled Nitriding and Nitriding Atmospheres on the Formation of Reaction-Bonded Si₃N₄", Ceramic Bulletin, Volume 60, No. 6 (1981), 613 in which he also describes benefits derived by using a nitriding gas mixture of nitrogen with minor amounts of hydrogen and helium. The use of a combined nitrogen-hydrogen nitriding gas in the reaction bonding of Si₃N₄ is described by Shaw and Zeleznik in an article titled "Thermodynamics of Silicon Nitridation: Effect of Hydrogen", communications of the American Ceramic Society, November 1982, C180-C181 and the effect of temperature and nitrogen pressure on the kinetics of silicon nitridation along with the need for an activating agent such as iron is described by Atkinson, Moulson and Roberts in an article titled "Nitridation of High-Purity Silicon", Journal American Ceramic Society, Volume 59, No. 7-8, 285-289.

Up until the time of the present invention, it has been the practice to nitride silicon powder by heating for long periods of time. An example of such is described in United States Patent 3,819,786, where a blend of silicon nitride powder and a binder mixture is heated in a stream of nitrogen from ambient to 1000°C at 50°C/hr and then held under static nitrogen for 20 hours at 1350°C and 10 hours at 1450°C with a total nitriding time of more than thirty hours.

An example of a compound heating schedule for nitriding a mixture of silicon and silicon carbide powder is described in United States Patent 3,222,438, where the mixture is first compacted into a green compact and then heated in an atmosphere of nitrogen at a temperature of 1250°C for 16 hours and then at 1450°C for 3-4 hours where the first stage heating is conducted to pre-sinter the compound so that it doesn't melt at the 1450°C temperature since the melting point of silicon is about 1420°C.

Reaction bonded silicon nitride is commonly prepared by reacting and nitriding the silicon (either as a powder or as a formed article) with nitrogen by exposing the silicon to a nitrogen-containing atmosphere at temperatures of 1100°C to about 1420°C for times sufficient to produce the silicon nitride. It is not uncommon for the nitriding time in prior art methods to about 100-200 hours. It is normal for a small amount of nitriding aid (e.g., iron oxide or nickel oxide) to be initially mixed with the silicon powder to enhance the nitridation of the silicon during the nitriding step.

U.S. Patent No. 3,206,318 to Yamauchi et al. teaches a method of nitriding metallic silicon which lowers the ill effects of the oxidation of silicon nitride, in which the nitriding catalyst is (a) at least one primary substance selected from the group consisting of metallic vanadium, the inorganic compounds thereof, and mixtures thereof; or (b) that comprising (a) in which has been incorporated at least one secondary substance, selected from the group consisting of metallic cobalt, manganese, chromium, copper, nickel, iron, barium, and calcium and the inorganic compounds thereof. Yamauchi, et al. also teach a refractory article in which granular refractory material, such as alumina, is bonded with silicon nitride. The patent furthermore teaches that the oxides of the metals, Cu, Co, Ni, Cr, Mn and V, may likewise be used and that the quantity of these oxides is suitably 0.1-2 moles in terms of the metallic element to 100 moles of the silicon.

U.S. Patent No. 4,235,857, METHOD OF NITRIDING SILICON, to Mangels teaches that silicon can be nitrided using a nitriding cycle over the temperature range of 900°C to 1420°C in an atmosphere consisting of a mixture of nitrogen, hydrogen and helium. However, the chemical composition of the nitriding gas is constantly changing due to the consumption of nitrogen during the nitridation of the silicon article, with the chemical activity of the nitrogen decreasing (partial pressure of nitrogen in the furnace decreases) as the temperature increases. The examples cited by Mangles have nitriding times of from 130 to 175 hours.

U.S. Patent No. 4,351,787 to Martinengo et al. teaches that sintered silicon nitride articles can be prepared by forming a silicon powder mixture containing one or more sintering additives into a compact, the additives being present in the powder in an amount such as to ensure an additive content of from 0.5 to 20 wt % in the silicon nitride compact; heating the compact under a pure nitrogen gas blanket at a temperature not exceeding 1500°C to convert the silicon into reaction bonded silicon nitride; and sintering the reaction bonded silicon nitride compact by heating in a nitrogen gas atmosphere at a temperature of at least 1500°C. Furthermore, it is taught that the silicon powder size is from 0.1 to 44 microns in size and of high purity or containing only very small amounts of nitriding catalysts. The Martinengo et al. patent teaches that any conventional sintering additive may be used. Best results are said to be achieved by using MgO, and especially in combination with Y₂O₃. Other preferred additives mentioned in the patent are MgO, Y₂O₃, CeO₂, ZrO₂, BeO, Mg₃N₂, and AlN. Other examples of additives are given as Mg₂Si, MgAl₂O₄, and rare earth additions such as La₂O₃. Also iron can be used with advantage, usually in mixture with conventional additives such as MgO, Y₂O₃, and CeO₂.

Finally, EP-A-0322174 describes a procedure for making silicon nitride articles in which articles formed from silicon which has been activated in an aqueous slurry containing a nitriding aid, are nitrided at a temperature which is virtually continuously increasing from approximately 1000°C to 1420°C in a nitriding atmosphere containing nitrogen, hydrogen and helium.

The present invention seeks to provide an improved process for nitriding silicon-containing materials to minimize the processing time, while retaining a high quality end product.

In accordance with the invention, there is now provided a process for nitriding materials containing silicon to form a silicon nitride material predominantly in the alpha-phase, characterised by subjecting a silicon-containing material which has not been reacted with water, to a nitriding atmosphere containing at least nitrogen, helium and hydrogen, and water vapor in an amount of up to 5 mole percent of the nitriding atmosphere, at an elevated temperature while increasing the temperature at a substantially linear rate of 5°C to 50°C per hour for a period of 7 to 90 hours from a starting temperature of about 1000°C to a final temperature of 1350 to 1450°C, and maintaining a substantially constant nitrogen partial pressure.

The preferred nitriding atmosphere comprises from about 40 to less than 60 mole percent helium, from about 40 to less than 60 mole percent nitrogen, from about 1 to about 10 mole percent hydrogen, and up to 5 mole percent water vapor. Furthermore, it is necessary to perform the nitriding step while heating the silicon powder at a substantially linearly increasing temperature of 5°C to 50°C per hour, more favorably from about 15 to about 25°C per hour, from a starting temperature of about 1000°C until a temperature of 1350°C to 1450°C is reached. Superior results are achieved when the composition of the nitriding gas remains substantially constant throughout the nitriding step by monitored addition of substantially pure nitrogen to the helium, hydrogen, water vapor and nitrogen combination as the nitrogen is used up in the formation of silicon nitride from the elemental silicon.

A particular advantage of the process of the present invention over the prior art is the ability of the starting material to be nitrided in a furnace heated at a substantially linear rate thereby saving a great amount of time. Thus, the starting material may be linearly heated, without periods of temperature holding or maintenance, due to the particular processing and combination of elements. This advantage is of great importance because, it reduces the manufacturing time to a fraction of the prior art methods. Whereas prior art methods describe reaction furnace times of from about 120 hours (5 days) to 29 days, the present invention may generally be practiced within several hours. Therefore, the present invention brings the manufacture of quality silicon nitride powder and ccmpacted articles well within the realm of commercial feasibility.

Nitriding of the silicon body is accomplished by increasing the temperature of the furnace from about 1000°C to a final temperature of 1350°C to 1450°C at the rate of 5°C to 50°C per hour. Finally, the silicon nitride mass, whether powder or article, is cooled to room temperature. It may be advantageous to process the mass on a vibratory finisher to remove any light-colored surface coating. Processed powders and compacted articles may be manufactured utilizing the same above described processes.

This invention has the advantage of allowing relatively rapid, linear heating during nitridation (5-50°C per hour) without resulting in too rapid a reaction which tends to cause consequent melting of the silicon, and has been experienced in the prior art. In prior art methods, linear heating was not utilized because it caused overheating of the silicon containing mass, resulting from the inability to control the highly exothermic reaction of the silicon with nitrogen during nitriding. Temperature plateaus were required to alleviate overheating in the prior art methods. These plateaus cause great time delay and result in considerably longer manufacturing times. Linear heating has a distinct advantage in that the reaction occurs much more quickly, thereby increasing the commercial feasibility of manufacturing silicon nitride.

It is believed that the present invention helps to prevent such an overheating reaction from occurring due to the use of helium and the presence of gaseous water in the nitriding gas. Helium has a relatively high thermal conductivity which is believed to greatly assist in removing the heat from the reaction sites, so that the occurrence of localized hot spots is reduced during the reaction. Water vapor may be deliberately introduced into the nitriding atmosphere or may be carried with the silicon. The water vapor also appears to help moderate the highly exothermic reaction of silicon with nitrogen as it forms silicon nitride.

The processes of this invention generally include nitriding a silicon-containing material to form a silicon nitride material predominantly in the alpha phase. The silicon-containing material is nitrided by subjecting to a nitriding atmosphere at an elevated temperature to effect the nitriding. The nitriding atmosphere contains at least nitrogen, helium hydrogen and up to 5 mole percent water vapor. The composition of the nitriding atmosphere is kept substantially constant even though nitrogen is being consumed during the nitriding step by maintaining a substantially constant partial pressure of nitrogen gas during the nitriding. The nitriding atmosphere contains nitrogen, helium, hydrogen, and up to 5 mole percent water vapor gases. The nitrogen may be present from about 10 to less than 90 mole percent, while helium may be present from about 10 to less than 90 mole percent, hydrogen present from about 1 to about 10 mole percent, and the water vapor up to about 5 mole percent. The nitrogen atmosphere may be a combination of these mole percentages of the above-described gas constituents.

The nitriding step is to be performed while heating to achieve a rate of temperature increase of 5°C-50°C per hour until an elevated temperature of 1350°C to 1450°C is reached. The nitriding step begins at about 1000°C with the temperature increasing at a rate of 5°C to 50°C, and preferably increasing at a rate of 15-25°C per hour. The rate of increasing temperature during nitriding is substantially linear. The nitriding step is held between 1350°C to 1450°C for less than 2 hours after the temperature has been increased. Furthermore, the nitriding is preferably accomplished with a system pressure of from about 50 to about 200 kPa (about a 1/2 atmosphere absolute up to about 2 atmospheres absolute).

During this heating and nitriding cycle, nitrogen is consumed by the silicon to form silicon nitride. The nitriding gas composition in the furnace atmosphere is kept constant by admitting substantially pure nitrogen gas into the furnace to maintain the slightly greater than atmospheric pressure. Once the upper temperature is reached, from 1350°C to 1450°C, preferably 1420°C, that temperature is maintained for about 1 hour and the heat source is shut off and the silicon nitride powder or articles are allowed to cool. Samples prepared by this method display excellent properties, low size distortion and high material integrity.

The present invention involves a process for nitriding materials containing silicon which has not been reacted with water. It is believed that a silicon nitride material is formed which is predominantly in the alpha-phase. The method includes nitriding the silicon-containing material by subjecting it to a nitriding atmosphere preferably containing 40 to less than 60 mole percent nitrogen, from 40 to less than 60 mole percent helium, and from 1 to 10 mole percent hydrogen, in addition to water vapor in an amount of up to 5 mole percent. The nitriding begins at about 1000°C and occurs with a substantially linear upwardly increasing temperature of 5°C to 50°C per hour to an elevated temperature of between 1350°C to 1450°C, preferably at a system pressure of about 50 to about 200 kPa (from about one half to about two atmospheres absolute). The composition of the gas constituents of the nitriding atmosphere is maintained with a substantially constant partial pressure of nitrogen gas during the nitriding. The method of the invention is useful with silicon-containing materials which have been drymilled or otherwise processed such that they do not contain a water-silicon product.

Thus, there is provided in accordance with the present invention, a method for nitriding a silicon-containing material which takes much less time than the prior art methods.

The following Example demonstrates a process which, althrough it is outside the scope of the invention, illustrates the beneficial effect of water vapor in the nitriding atmosphere.

Added together in a ball mill are: (1) 45.4 kg (100 pounds) commercial grade silicon metal powder ground to approximately 2.3 F.A.D. (Fisher Average Diameter) or finer, which is substantially less than 20 µm size; (2) 1.36 kg (3 pounds) 1µm size iron oxide Fe₂O₃; (3) 30.8 kg (68 pounds) distilled water; and (4) 50 grams of dispersing aid, Darvan No. 1, a registered trademark of the R.T. Vanderbilt Company, Inc. This slurry mixture is comminuted for 3 hours while venting the evolving gases (hydrogen and water vapor) every hour. The 0.68 kg (1 1/2 pounds) polyvinylalcohol (available from Air Products, Inc., Allentown, PA), 0.23 kg (1/2 pound) polyethylene glycol (CARBOWAX 1000 available from Union Carbide Corporation, New York, NY) 0.11 kg (1/4 pound) xanthan gum (KELZAN, available from Kelco, a division of Merck & Co., Inc., Rahway, NJ), and 0.45 kg (1 pound) food grade glycerol are added to the slurry in the ball mill and comminution is continued for about 1 hour. These organic additives have an added advantage in that they are all food grade materials, thus posing greatly reduced toxicity problems over prior art methods.

After ball milling, the slurry is pumped into a holding tank, covered loosely to allow evolving gases to escape, and aged overnight to allow the majority of the reaction between the silicon and the water to occur. The reaction is evidenced by substantial frothing which is reduced by morning.

The reacted slurry is transferred into a circulating tank and continuously circulated to keep the viscosity low by shearing, thereby keeping the slurry from gelling due to the presence of the xanthan gum.

The slurry is then pumped into a spray dryer, and spray-dried. The collected spray-dried granules are screen-separated into three distinct particle size ranges. The particles that are greater than 30 mesh in size are set aside for recycling. The fine particles of less than 200 mesh are isopressed in an isopress machine to produce billets. The spray-dried granules of a size between 30 and 200 mesh are put into a dry press and pressed into green body parts. Due to the addition of the organic materials, the green body parts are easily machinable after isopressing or dry pressing without having to pre-sinter or pre-nitride to add strength to the silicon body. The pressed parts are then racked on saggers and put into a furnace.

The furnace is evacuated to a pressure of about 1 kPa, i.e. 100 kPa below ambient (-100 kPa) and then filled with pure hydrogen gas. The temperature of the furnace is then increased from room temperature to 1000°C over a two hour period by a nearly linear progression of increasing temperature while flowing hydrogen through the furnace at atmospheric pressure to burn off the organic materials. The substantially non-toxic effluent which is vented includes carbon dioxide and water.

The furnace is purged with flowing nitrogen to obtain a noncombustible atmosphere and then evacuated again to remove the nitrogen and any remaining effluent. Helium gas is added until a pressure of 50 kPa is indicated. Then a nitrogen-hydrogen gas blend consisting of 4 weight percent hydrogen and 96 weight percent nitrogen is admitted to the furnace until the pressure is slightly above atmospheric pressure (approximately 120 kPa) to avoid any leakage of ambient air into the furnace. The resulting composition of the nitriding gas constituents nitrogen, helium and hydrogen in the nitriding gas are 48%, 50% and 2%, respectively. No water vapor is required in the nitriding gas in this procedure because the silicon was initially comminuted with water and substantial reaction was allowed to occur.

The temperature is then increased from 1000°C to about 1420°C at a linear rate of about 20°C per hour. During this heating cycle, nitrogen is consumed by the silicon to form silicon nitride. The nitriding gas composition in the furnace atmosphere is kept constant by admitting pure nitrogen gas into the furnace as nitrogen is consumed during the conversion of the silicon to maintain a constant nitrogen partial pressure. Once 1420°C is reached, the temperature is maintained for 1 hour; then the heat source is shut off and the silicon nitride articles are allowed to cool. Samples prepared by this method display excellent properties, low size distortion and high material integrity.

Test bars of the reaction bonded silicon nitride may be made having dimensions of 2.54 x 8.13 x 57.15 mm (0.100 x 0.320 x 2.25 inches). In four-point modulus of rupture tests of such bars using conditions consisting of a lower span of 44.45 mm (1.75 inches) and an upper span of 15.24 mm (0.60 inches) with a loading rate of 0.51 mm/minute (0.02 inches/minute), typical values for the density, the average four-point modulus of rupture (MOR), and the range of MOR strengths are provided in Table 1.

**TABLE 1**

| Density (gm/cc) | 4-Point MOR Averages (Kpsi*) | 4-Point MOR Range (Kpsi) |
|---|---|---|
| 2.8-2.9 | 31-36 | 27-42 |

| | | |
|---|---|---|
| *Kpsi = Thousands of pounds per square inch. | | |

The nitrided products of the present invention find utility as turbine blades, engine components, valves, stems and all other traditional uses for silicon nitride ceramic components.

## Claims

1. A process for nitriding materials containing silicon to form a silicon nitride material predominantly in the alpha-phase, characterised by subjecting a silicon-containing material which has not been reacted with water, to a nitriding atmosphere containing at least nitrogen, helium and hydrogen,and water vapor in an amount of up to 5 mole percent of the nitriding atmosphere, at an elevated temperature while increasing the temperature at a substantially linear rate of 5°C to 50°C per hour for a period of 7 to 90 hours from a starting temperature of about 1000°C to a final temperature of 1350 to 1450°C, and maintaining a substantially constant nitrogen partial pressure.

2. A process according to claim 1, wherein the nitriding atmosphere includes 10 to less than 90 mole percent nitrogen, 10 to less than 90 mole percent helium and 1 to 10 mole percent hydrogen.

3. A process according to claim 1 or claim 2, wherein the nitriding atmosphere comprises 40 to less than 60 mole percent nitrogen, 40 to less than 60 mole percent helium and 1 to 10 mole percent hydrogen.

4. A process according to any one of claims 1 to 3, wherein nitriding is carried out under a pressure of 50 to 200 kPa (0.5 to 2 atmospheres absolute).

## Patentansprüche

1. Verfahren zum Nitrieren von Silizium enthaltenden Materialien zur Bildung eines Siliziumnitritmaterials mit vorherrschender Alphaphase, dadurch gekennzeichnet, daß ein Silizium enthaltendes Material, welches nicht mit Wasser reagiert hat, einer Nitrierungsatmosphäre ausgesetzt wird, die mindestens Stickstoff, Helium und Wasserstoff enthält und Wasserdampf in einer Menge bis zu 5 mol-% der Nitrierungsatmosphäre, und zwar bei einer erhöhten Temperatur, während die Temperatur mit einer im wesentlichen linearen Rate von 5°C auf 50 °C pro Stunde für eine Zeitdauer von 7 bis 90 Stunden ausgehend von einer Starttemperatur von ungefähr 1000°C zu einer Endtemperatur von 1350°C bis 1450°C erhöht wird; und Aufrechterhalten eines im wesentlichen konstanten Stickstoffpartialdrucks.

2. Verfahren nach Anspruch 1 wobei die Nitrierungsatmosphäre 10 bis weniger als 9 mol-% Stickstoff enthält, 10 bis weniger als 9 mol-% Helium und 1 bis 10 mol-% Wasserstoff.

3. Verfahren nach Anspruch 1 oder 2 wobei die Nitrierungsatmosphäre 40 bis weniger als 60 mol-% Stickstoff, 40 bis weniger als 60 mol-% Helium und 1 bis 10 mol-% Wasserstoff enthält.

4. Verfahren nach einem der Ansprüche 1 bis 3 wobei die Nitrierung unter einem Druck von 50 bis 200 kPa (0,5 bis 2 Atmosphären absolut) ausgeführt wird.

## Revendications

1. Un procédé pour nitrurer des matières contenant du silicium afin de former une matière en nitrure de silicium qui est de manière prédominante dans la forme alpha, caractérisé en ce qu'il consiste à soumettre une matière contenant du silicium, qui n'a pas fait l'objet d'une réaction avec de l'eau, à une atmosphère de nitruration contenant au moins de l'azote, de l'hélium et de l'hydrogène et de la vapeur d'eau en une quantité pouvant atteindre jusqu'à 5 moles pour cent de l'atmosphère de nitruration, à une température élevée, tout en accroissant la température à un taux sensiblement linéaire de 5°C à 50°C par heure pendant une période de 7 à 90 heures à partir d'une température de départ d'environ 1.000°C jusqu'à une température finale de 1.350 à 1.450°C et tout en maintenant une pression partielle d'azote sensiblement constante.

2. Un procédé selon la revendication 1, dans lequel l'atmosphère de nitruration comporte entre 10 et moins de 90 moles pour cent d'azote, entre 10 et moins de 90 moles pour cent d'hélium et entre 1 et 10 moles pour cent d'hydrogène.

3. Un procédé selon la revendication 1, dans lequel l'atmosphère de nitruration comporte entre 40 et moins de 60 moles pour cent d'azote, entre 40 et moins de 60 moles pour cent d'hélium et entre 1 et 10 moles pour cent d'hydrogène.

4. Un procédé selon l'une quelconque des revendications 1 à 3, dans lequel la nitruration effectuée sous une pression comprise entre 50 et 200 kPa (entre 0,5 et 2 atmosphères absolues).
